# EUROPÄISCHE PATENTSCHRIFT

(11) **EP 0 912 277 B1**
(45) Veröffentlichungstag und Bekanntmachung des Hinweises auf die Patenterteilung: **16.05.2001**
(21) Anmeldenummer: 97929255.4
(22) Anmeldetag: 21.06.1997
(51) Int. Cl.: B22D 19/02

(54) **VERFAHREN UND VORRICHTUNG ZUM HERSTELLEN EINER BREMSTROMMEL ODER EINER BREMSSCHEIBE**
PROCESS AND DEVICE FOR PRODUCING A BRAKE DRUM OR BRAKE DISK
PROCEDE ET DISPOSITIF DE PRODUCTION D'UN TAMBOUR DE FREIN OU D'UN DISQUE DE FREIN

(30) Priorität: 29.06.1996 DE 19626175
(43) Veröffentlichungstag der Anmeldung: 06.05.1999
(73) Patentinhaber: Honsel AG, 59872 Meschede (DE)
(72) Erfinder: ÖZCAN, Kenan, D-59872 Meschede (DE)
(74) Vertreter: Rehders, Jochen, Dipl.-Ing.
(86) Internationale Anmeldenummer: EP9703269
(87) Internationale Veröffentlichungsnummer: WO9800254

(56) Entgegenhaltungen:
- EP-A- 0 645 205
- EP-A- 0 662 361
- GB-A- 2 254 814
- GB-A- 2 259 878

## Beschreibung

Die Erfindung betrifft ein Verfahren und eine Vorrichtung zum Herstellen einer Bremstrommel oder einer Bremsscheibe mit einem Trägerelement aus einer gut gießbaren und bearbeitbaren Leichtmetallegierung und mit einem Reibbelag aus einer faser- oder partikelverstärkten Leichtmetallegierung.

Eine Wellenbremsscheibe für Schienenfahrzeuge ist in der deutschen Patentschrift 44 00 898 beschrieben. Die Wellenbremsscheibe ist als Monoblockscheibe oder als aus Nabe und Reibring zusammengesetzte Scheibe hergestellt, vorzugsweise mit einer Innenbelüftung und weist in einer Aluminiumlegierungsmatrix verteilte, harte Keramikpartikel auf. Bei dieser Wellenbremsscheibe soll zumindest der Reibring, vorzugsweise auch die damit verbundenen Kühlrippen und/oder auch die Nabe aus einer mit harten keramischen Partikeln verstärkten, untereutektischen AlSi-Basislegierung bestehen, wobei die Wellenbremsscheibe, wenn sie aus Nabe und Reibring zusammengesetzt ist, aus miteinander verschraubten Elementen besteht. Da mit harten keramischen Partikeln verstärkte Aluminiumlegierungen sehr schwer zu bearbeiten sind, sind die in der deutschen Patentschrift 44 00 898 vorgeschlagene Lösungen, die Wellenbremsscheibe entweder als Monoblockscheibe oder als aus Nabe und Reibring zusammengesetzte Scheibe herzustellen, nachteilig, da beide Lösung einen erheblichen Bearbeitungsaufwand erfordern. Bei der Monoblockscheibe muß die Nabe, die ebenfalls aus der mit harten keramischen Partikeln verstärkten Aluminiumlegierung besteht, mechanisch bearbeitet werden. Bei der aus Nabe und Reibring zusammengesetzten Scheibe muß die Verbindungsstelle zwischen der Nabe und dem Reibring mechanisch bearbeitet werden. In beiden Fällen ist dieser Bearbeitungsaufwand wegen der verwendeten, mit harten keramischen Partikeln verstärkten Aluminiumlegierung schwierig durchzuführen.

In der EP 0 662 361 A1 ist eine Druckgießvorrichtung zum Herstellen eines Metallgegenstandes mit einem in einer Unterform angeordneten keramischen Füllrohr, einem Keramikfüllkolben im Füllrohr, einer gleitenden Ringdichtung zwischen dem Füllrohr und dem Füllkolben, einer um das Füllrohr gelegten Induktionsspule zur Metallsumpferzeugung über dem Füllkolben und einer beweglichen Oberform beschrieben. Zusätzlich sind in dem Füllrohr senkrechte, isolierte und wassergekühlte Leiter angeordnet, so daß durch die vereinte Wirkung der senkrechten Leiter und der Induktionsspule ein Aufschmelzen eines in das Füllrohr eingesetzten Bolzens mit gleichzeitiger Durchwirbelung und Abheben des geschmolzenen Materials von der Füllrohrwandung erreicht wird.

Dementsprechend liegt der Erfindung das Problem zugrunde, ein Verfahren und eine Vorrichtung zum Herstellen einer Bremstrommel oder einer Bremsscheibe mit einem Trägerelement aus einer gut gießbaren, gut bearbeitbaren und preiswerten Leichtmetallegierung und mit einem verschleißfesten Reibbelag aus einer faser- oder partikelverstärkten Leichtmetallegierung zu schaffen, bei denen die Bearbeitung des verschleißfesten Reibbelags aus der faser- oder partikelverstärkten Leichtmetallegierung auf die mechanische Bearbeitung der Reibfläche oder Reibflächen beschränkt ist.

Ausgehend von dieser Problemstellung wird ein Verfahren vorgeschlagen, das erfindungsgemäß aus den Schritten besteht:
- Einbringen eines vorportionierten Leichtmetallegierungsbolzens und Aufschmelzen des Bolzens oder Einbringen einer geschmolzenen, vorportionierten Leichtmetallegierungsmenge für das Trägerelement oder den Reibbelag in ein Füllrohr einer Form,
- Herstellen des Trägerelements oder des Reibbelags in einer Form durch Verbringen der vorportionierten Leichtmetallegierungsschmelze vom Füllrohr in die Form,
- Abkühlen des Trägerelements oder des Reibbelags auf eine gestalthaltende Temperatur,
- Einbringen eines vorportionierten Leichtmetallegierungsbolzens und Aufschmelzen des Bolzens oder Einbringen einer geschmolzenen, vorportionierten Leichtmetallegierungsmenge für das Trägerelement oder den Reibbelag in ein Füllrohr einer Form,
- unmittelbar anschließendes Angießen der partikelverstärkten Leichtmetallegierung an das Trägerelement oder Umgießen des Trägerelements mit der partikelverstärkten Leichtmetallegierung oder Angießen der Leichtmetallegierung für das Trägerelement an dem Reibbelag oder Umgießen des Reibbelages durch Verbringen der vorportionierten Leichtmetallegierungsschmelze vom Füllrohr in die Form und
- Abkühlen und Entformen.

Mit dem erfindungsgemäßen Verfahren läßt sich eine Bremstrommel oder eine Bremsscheibe im Verbundgußverfahren herstellen, wobei nur der Reibbelag aus einer faser- oder partikelverstärkten Leichtmetallegierung besteht und mit der gut gießbaren und bearbeitbaren sowie preiswerten Leichtmetallegierung des Trägerelements fest verbunden ist. Dementsprechend braucht bei dem Reibbelag nur die Reibfläche mechanisch bearbeitet zu werden, während die übrigen mechanischen Bearbeitungsschritte, die erforderlich sind, um das Gußstück für den Einsatzzweck verwendbar zu machen, an der gut gießbaren und bearbeitbaren Leichtmetallegierung durchzuführen sind und dementsprechend keine besonderen Kosten und Schwierigkeiten bereiten. Vorzugsweise läßt sich eine kurzfaserverstärkte Leichtmetallegierung verwenden.

Das Trägerelement oder der Reibbelag kann in einer ersten Form hergestellt werden, wonach das Angießen oder Umgießen in einer zweiten Form erfolgt.

Vorzugsweise wird jedoch das Trägerelement oder der Reibbelag in einer Form hergestellt, in dieser Form nach dem Abkühlen des Trägerelements oder des Reibbelags durch Bewegen von Teilen der Form, insbesondere von Kernzügen, Raum für den Reibbelag oder das Trägerelement geschaffen und in diesen Raum die faser- oder partikelverstärkte Leichtmetallegierung oder die Leichtmetallegierung für das Trägerelement eingebracht.

Durch eine geeignete Nabenkonstruktion wird für einen gießtechnisch optimalen zentralen Zugang des im zweiten Zyklus an-, um- oder aufzugießenden Metalls durch die Anschnitte gesorgt, die leicht zu stanzen sind.

Um einen sicheren Verbund zwischen der Leichtmetallegierung für das Trägerelement und der faser- und partikelverstärkten Leichtmetallegierung beim Gießen zu erreichen, können Vorsprünge, Rippen und/oder Durchbrüche vorgesehen sein, die eine gegenseitige Verzahnung der aneinander oder umeinander gegossenen Leichtmetallegierungen bewirken.

Besonders bevorzugt ist es, wenn zwischen der Leichtmetallegierung für das Trägerelement und der faser- oder partikelverstärkten Leichtmetallegierung beim Gießen ein intermetallischer Verbund durch eine Oberflächenbehandlung des Trägerelements oder des Reibbelags erzeugt wird, wobei diese Oberflächenbehandlung vorzugsweise darin bestehen kann, daß die Oberfläche der zuerst in die Form eingebrachten Leichtmetallegierung unmittelbar vor dem Aufbringen der zweiten Leichtmetallegierung mit einem Flußmittel behandelt wird, das in einem Trägerfluid als Suspension oder Lösung vorhanden sein kann.

Besonders bevorzugt ist, wenn die Behandlung mit einem Flußmittel mit dem Abkühlen der zuerst in die Form eingebrachten Leichtmetallegierung kombiniert wird, indem diese Leichtmetallegierung mit einem flußmittelhaltigen Kühlmittel, insbesondere flußmittelhaltigem Wasser beaufschlagt wird.

Zur Verringerung der Oxidation der Oberflächen des Trägerelements und des Reibbelags können kurz vor dem Gießen in die Form Vakuum von absolut 20 bis 100 mbar oder Schutzgas aus Stickstoff oder Argon oder ähnliches eingebracht werden.

Zum Abkühlen der zuerst in die Form eingebrachten Leichtmetallegierung auf eine gestalthaltende Temperatur sind nur geringe Mengen Wasser erforderlich, das sofort verdampft, während das Flußmittel die Oberfläche dieser Leichtmetallegierung für das Angießen oder Umgießen mit der zweiten Leichtmetallegierung vorbereitet. Wenn notwendig, kann eine nachfolgende Beaufschlagung der Gußoberfläche mit Preßluft erfolgen. Dadurch kann die Abkühl- und Trocknungszeit verkürzt werden.

Gemäß einem vorteilhaften Gießverfahren können vorportionierte einzelne Bolzen oder geschmolzene Leichtmetallegierung für den Reibbelag und Faser- und Partikelverstärkungsmaterial in ein Füllrohr an der Form eingebracht werden, die Leichtmetallegierung induktiv erwärmt, die Leichtmetallegierung mit dem Faser- und Partikelverstärkungsmaterial durch die aufgrund der Induktionsströme bewirkte Verwirbelung der Schmelze gleichmäßig vermischt und die vermischte Schmelze in den für den Reibbelag vorgesehenen Raum eingebracht werden. Bei diesem Gießverfahren ist es somit nicht notwendig, eine bereits mit Faser- oder Partikelverstärkungsmaterial versehene Verbundleichtmetallegierung vorzubereiten oder zu beziehen. Vielmehr ist es möglich, die Leichtmetallegierung entweder als Bolzen oder bereits geschmolzen in der zum Gießen erforderlichen Menge in das Füllrohr einzubringen, das Faser- oder Partikelverstärkungsmaterial hinzuzugeben und das Vermischen durch die aufgrund der Induktionsströme bewirkte Verwirbelung der Schmelze zu bewerkstelligen. Ein gesonderter Schritt zum Herstellen der faser- oder partikelverstärkten Leichtmetallegierung ist somit nicht erforderlich. Das Einbringen vom Faser- oder Partikelverstärkungsmaterial in die Leichtmetallegierung erfolgt durch den Schmelzfluß beim Einschmelzen der Leichtmetallegierung oder durch die Eingabe in einen Wirbel der Schmelze, der durch einen Rührer von oben oder durch das Rotieren erzeugte Zentrifugalkraft oder durch die Injektion durch einen Kanal im Gießkolben erzeugt wird.

Im einzelnen kann das Gießverfahren so ausgestaltet sein, daß in das Füllrohr zunächst ein vorportionierter Bolzen der Leichtmetallegierung für das Trägerelement eingebracht, induktiv aufgeschmolzen und in den für das Trägerelement vorgesehenen Raum in der Form eingebracht wird und während das Trägerelement abgekühlt und durch Bewegen von Kernzügen Raum für den Reibbelag und neue Anschnitte geschaffen wird, ein vorportionierter Bolzen der Leichtmetallegierung für den Reibbelag sowie Faser- oder Partikelverstärkungsmaterial gleichzeitig oder zeitversetzt in das Füllrohr eingebracht werden, die Leichtmetallegierung induktiv aufgeschmolzen und auf die Gießtemperatur gebracht und mit dem Faser- oder Partikelverstärkungsmaterial gleichzeitig oder nacheinander vermischt und in den für den Reibbelag geschaffenen Raum in der Form eingebracht wird.

Bei Anwendung des Thixo-Gießverfahrens ist es auch möglich, nacheinander einen Bolzen der Leichtmetallegierung mit thixotropen Eigenschaften für das Trägerelement und einen Bolzen aus der Leichtmetallegierung für den Reibbelag mit eingebettetem Faser- oder Partikelverstärkungsmaterial in ein Füllrohr in der Form einzubringen, einen der Bolzen oder beide Bolzen induktiv auf eine Temperatur oberhalb des Soliduspunktes und unterhalb des Liquiduspunktes zu erwärmen oder einen der Bolzen oder beide Bolzen auf Schmelztemperatur zu erwärmen und im teigigem oder im geschmolzenen Zustand in die Form zu drücken. Der thixotrope Zustand kann bei Leichtmetallegierungen ohne Verstärkungsmaterial durch das kontrollierte Abkühlen und Halten im Zweiphasengebiet fest-flüssig und durch ein gleichzeitiges Rühren durch einen mechanischen Rührer von oben oder durch den Gießkolben von unten im Füllrohr oder durch die Rotation des Füllrohres im Magnetfeld in der Induktionsspule erreicht werden. Durch eine Ausbildung eines Windungsgradienten der Induktionsspule kann die vertikale Ab- und Aufbewegung der Füllkammer mit dem Gießkolben in der Spule eine Vergleichmäßigung der Rührbewegung bei konstanter Metalltemperatur bewirken. Durch die Variation der Induktionsfrequenz zwischen 50 bis 10.000 Hz kann das Rühren kontrolliert in kürzester Zeit mit moderater Badbewegung erfolgen. Das Thixo-Gießverfahren ist besonders vorteilhaft mit einem Bolzen aus der Leichtmetallegierung für den Reibbelag mit eingebettetem Faser- oder Partikelverstärkungsmaterial zu verwenden, da hierdurch die Homogenität des Materials für den Reibbelag gewährleistet bleibt. Der Bolzen der Leichtmetallegierung für das Trägerelement kann ebenfalls im thixotropen, aber auch im geschmolzenen Zustand in die Form gedrückt werden.

Die Vorrichtung zum Herstellen einer Bremstrommel oder Bremsscheibe der eingangs erwähnten Art kann eine Form sein mit
- einem in einer Unterform aus Stahl angeordneten keramischen Füllrohr,
- einem Keramikfüllkolben im Füllrohr,
- einer gleitenden Ringdichtung zwischen dem Füllrohr und dem Füllkolben und/oder einer festen Dichtung zwischen der Unterform und dem Füllrohr aus temperaturbeständigem Fasermaterial und/oder aus Graphit und/oder aus Keramik-Metall-Verbundwerkstoff,
- einer um das Füllrohr gelegten Induktionsspule mit einer konzentrierten Windungsdichte zur schnellen Metallsumpferzeugung über dem Füllkolben,
- einer beweglichen Oberform aus Stahl oder Formsand und
- in der Unterform und/oder der Oberform Räume für das Trägerelement oder den Reibbelag freigebenden, beweglichen Kernzügen, um nach dem Gießen einer Legierung ein Angießen der anderen Legierung zu ermöglichen.
Mittels der Induktionsspule werden die Leichtmetallegierung für das Trägerelement und die faser- oder partikelverstärkte Leichtmetallegierung für den Reibbelag auf Schmelztemperatur erwärmt oder gehalten bzw. auf eine Temperatur oberhalb des Soliduspunktes und unterhalb des Liquiduspunktes erwärmt oder gehalten, um diese Legierungen mittels des Füllkolbens in den Formhohlraum einzudrücken.

Das Füllrohr und der Füllkolben bestehen aus keramischen Material, um in diesem Bereich keine induktive Erwärmung außer in der im Füllrohr befindlichen Leichtmetallegierung zu bewirken.

Das Füllrohr mit dem Füllkolben können vertikale, radial-konzentrische oder radial exzentrische Bewegungen linearer oder oszillierender Art aufnehmen um die Effizienz des Magnetfeldes in der Induktionsspule zu vergleichmäßigen bzw. zu optimieren.

Die in der Unterform und/oder der Oberform angeordneten Räume für das Trägerelement oder den Reibbelag freigebende Kernzüge werden betätigt, wenn nach dem Abkühlen der ersten, in die Form eingebrachten Leichtmetallegierung die zweite Leichtmetallegierung in diese freigegebenen Räume eingebracht wird.

Um das Abkühlen der ersten eingebrachten Leichtmetallegierung zu steuern, kann die Unterform vorzugsweise aus einem beheizten Boden und einem gekühlten, den Umfang des Gußstücks begrenzenden Bereichs bestehen und kann auch die Oberform beheizt sein. Unter Berücksichtigung der in einem Temperaturintervall von 550 bis 750° C liegenden optimierten Gießtemperatur können der Boden der Unterform und die Oberform auf etwa 300° C beheizt und der den Umfang des Gußstücks begrenzende Bereich auf 100° C gekühlt sein, um eine optimierte zentrale Durchspeisung einerseits und eine peripherale, gerichtete Erstarrung andererseits zu erreichen. Um diese unterschiedlichen Temperaturen einzuhalten, können zwischen den Formelementen Dämmschichten mit Dichtelementen angeordnet sein.

Die Abdichtung zwischen dem Füllrohr und der Unterform läßt sich vorteilhaft durch einen in eine entsprechende Ausnehmung der Unterform eingreifenden Dichtwulst bewirken.

Die Bildung einer Oxidhaut beim Aufheizen des Leichtmetallbolzens und auf der Leichtmetallegierung wird durch Anwendung eines Vakuums oder durch ein Schutzgas aus Stickstoff oder Argon im Füllrohr verhindert.

Um ein unkontrolliertes Aufheizen der Unterform durch Induktionsströme zu vermeiden, kann zwischen der um das Füllrohr gelegten Induktionsspule und der Unterform eine magnetische Abschirmung vorgesehen sein.

Die Druckbeaufschlagung der Leichtmetallegierung durch die Anschnittöffnungen der Form mittels des Füllkolbens läßt sich besonders vorteilhaft erreichen, wenn der Füllkolben einen konvexen Kolbenboden aufweist. Dieser Füllkolben kann einen konzentrischen Kanal zur Einspritzung von metallischen oder keramischen Pulvern, Fasern oder Flüssigkeiten aufweisen. Dieser Füllkolben läßt sich auch als Nachdrückkolben am Ende des Gießvorgangs einsetzen, jedoch ist es ebenfalls mit Vorteil möglich, in der Oberform einen Nachdrückkolben koaxial zum Füllrohr anzuordnen. Der Nachdruckkolben kann zweiteilig mit einem koaxialen, verschiebbaren Kernbereich ausgebildet sein. Ein konzentrischer Ringkolben läßt sich dann vorteilhafterweise zum Abscheren, Abbrechen oder Abstanzen des Gießlaufs verwenden.

Da der Boden der Unterform beheizt und der den Umfang des Gußstücks begrenzende Bereich der Unterform gekühlt ist, ist es vorteilhaft, wenn diese beiden Teile der Unterformen voneinander geteilt sind und der Boden und/oder der Bereich zusätzlich radial geteilt sind, wodurch das Entformen des Gußstücks erleichtert und der Wärmeübergang durch einen Luftspalt erschwert wird.

Wird die Form mit Vakuum beaufschlagt, können Dichtungen vorgesehen sein, die ein Vakuum bis unter 30 mbar einzuhalten gestatten.

Das Einsprühen der zuerst in die Form eingebrachten Leichtmetallegierung mit Kühlmittel und Flußmittel kann dadurch erfolgen, daß die Oberform hochgefahren wird und dann das Einsprühen von außen erfolgt, jedoch weist bevorzugterweise die Form eine Sprühvorrichtung für Kühlmittel und/oder für Flußmittel auf, die es erlaubt, nur die Oberflächenbereiche der zuerst in die Form eingebrachten Leichtmetallegierung einzusprühen, die mit der danach eingebrachten Leichtmetallegierung in Berührung kommen.

Die Erfindung wird nachstehend anhand zweier in der Zeichnung dargestellter Ausführungsbeispiele des näheren erläutert. In der Zeichnung zeigen:
- Fig. 1: eine Draufsicht auf eine Unterform mit darin befindlichem Gußstück in Form einer Bremstrommel,
- Fig. 2: einen Querschnitt durch die geschlossene Form einschließlich Füllrohr, Füllkolben und Induktionsspule,
- Fig. 3: einen Querschnitt durch eine Form einschließlich Füllrohr, Füllkolben und Induktionsspule zur Herstellung einer Bremsscheibe und
- Fig. 4: eine Detailansicht eines Schieberwerkzeuges und eines Füllkolbens.

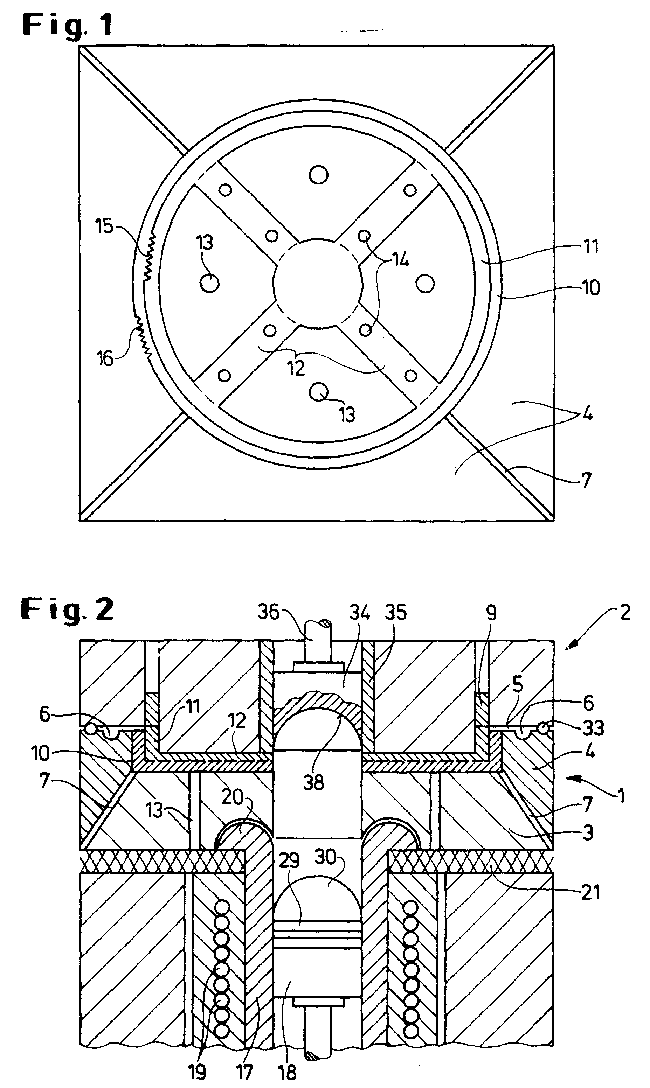

In Fig. 1 und 2 ist erkennbar, daß ein Gußstück in Form einer Bremstrommel aus einem Trägerelement 10 und einem Reibbelag 11 in einer Form aus einer Unterform 1 und einer beweglichen Oberform 2 hergestellt wird.

Die Unterform 1 besteht aus einem auf ca. 300° C beheizten Boden 3 und einer auf ca. 100° C gekühlten Seitenform 4, die in dem Bereich angeordnet ist, der den Umfang des Gußstücks 10, 11 bildet.

Die Unterform 1 und die Oberform 2 sind durch eine waagerechte Konturteilungsfuge 5 getrennt, in deren Flächen Luftbohnen 6 zum Entlüften der Form beim Gießen angeordnet sind. Zwischen dem Boden 3 und der Seitenform verläuft eine schräge Funktionsteilungsfuge 7.

In dem Bereich der Oberform 2, in dem der Raum für den Reibbelag 11 gebildet werden soll, ist ein ringförmiger Kernzug 9 angeordnet. Des weiteren sind nicht dargestellte, radial verlaufende Kernzüge vorgesehen, die radiale Kanäle 12 für die Leichtmetallegierung für den Reibbelag freigeben. Im Boden 3 der Unterform 1 sind in üblicher Weise Ausstoßer 13 angeordnet.

Im Bereich der Radialkanäle 12 sind Kernzüge in Form von Zapfen 14 angeordnet, die beim Einbringen der Aluminiumlegierung für das Trägerelement 10 eine Anzahl von Bohrungen im Bereich der Kanäle 12 freihalten und zum Einbringen der Aluminiumlegierung für den Reibbelag 11 zurückgezogen werden, so daß diese Bohrungen von der Aluminiumlegierung für den Reibbelag 11 ausgefüllt werden und eine mechanische Verklammerung mit der Aluminiumlegierung für das Trägerelement 10 bewirken. Ähnliche mechanische Verklammerungen werden durch eine Umfangsverzahnung 15 im Bereich zwischen dem Trägerelement 10 und dem Reibbelag 11 erreicht. Des weiteren kann der Außenumfang des Trägerelements 10 durch entsprechende Gestaltung der Seitenform 4 eine Verrippung 16 zur besseren Wärmeabfuhr durch das Trägerelement 10 während des Erstarrens des Reibbelags 11 erhalten.

Ein keramisches Füllrohr 17 ist unterhalb des Bodens 3 der Unterform 1 angeordnet und greift mit einem Dichtwulst 20 in eine entsprechende Ringausnehmung des Bodens 3 ein. In dem Füllrohr 17 ist ein konvexer Keramikfüllkolben 18 angeordnet, der sich in nicht dargestellter Weise axial und radial verschieben läßt, um die Aluminiumlegierungen für das Trägerelement 10 und für den Reibbelag 11 in die Form 1, 2 einzubringen. Der Füllkolben 18 ist zum Füllrohr 17 mittels einer schnell auswechselbaren Dichtung 29 abgedichtet, die aus einem Kolbenring oder vorzugsweise aus temperaturfestem Fasermaterial oder/und Keramik oder/und temperaturfestem Metall oder/und Keramik/Graphit/Metall-Verbund bestehen kann und sich daher bei Verschleiß leicht auswechseln läßt. Die Dichtung kann auch aus hintereinander axial aufgereihten Scheiben bestehen.

Um das Füllrohr 17 ist eine Induktionsspule 19 mit mit einem axialen Windungsprofil gelegt, die dazu dient, vorproportionierte Aluminiumlegierungen für das Trägerelement 10 und den Reibbelag 11 durch Induktionsströme in einer Zeit von kürzer als 10 Minuten zu erwärmen, zu erschmelzen und zu rühren.

Um das Erwärmen der vorproportionierten Vorlegierung zu intensivieren und zu vergleichmäßigen, kann das Füllrohr 17 mit Vorlegierung und Füllkolben 18 losgelöst von der Dichtung 29 im Magnetfeld der Induktionsspule 19 axial und radial bewegt werden. Für diesen Zweck kann die elektrische Frequenz des Induktionsstroms zwischen 50 Hz und 5.000 Hz kontinuierlich oder diskret verändert werden.

Wenn die Aluminiumlegierungen für das Trägerelement 10 und für den Reibbelag 11 im geschmolzenen Zustand in das Füllrohr 17 eingebracht werden, dient die durch die Induktionsspule 19 erzeugte Wärme dazu, die Temperatur der Schmelze zu halten und eine Durchwirbelung der Schmelze hervorzurufen, die ein Durchmischen der Aluminiummatrixlegierung für den Reibbelag 11 mit dem Faser- oder Partikelverstärkungsmaterial bewirkt. Da diese Durchmischung sehr intensiv ist, ist es möglich, die Aluminiumlegierung für den Reibbelag 11 getrennt von dem Faser- oder Partikelverstärkungsmaterial in das Füllrohr 17 einzubringen und erst dort zu vermischen. Diese "in-situ" Herstellung des Verbundwerkstoffs für den Reibbelag 11 kann durch gleichzeitiges Aufheizen und/oder durch Eindüsen (Eindrücken) der Fasern oder Partikel in die flüssige Aluminiumlegierung und/oder durch das Eingeben der Faser oder Partikel in die durch einen Rührer von oben verwirbelte Schmelzeoberfläche erfolgen.

Um ein unkontrolliertes Erwärmen des Bodens 3 der Unterform 1 zu vermeiden, ist zwischen der Induktionsspule 19 und diesem Boden 3 eine magnetische Abschirmung 21 angeordnet.

Mit einer leistungsfähigen Induktionsspule 19 können die Leichtmetallegierungen für das Trägerelement 10 und den Reibbelag 11 in Form von Bolzen in das Füllrohr 17 eingesetzt, dort aufgeschmolzen und durch Verschieben des Füllkolbens 18 in die Form 1, 2 eingebracht werden. Dabei können die Bolzen auch bereits auf eine Temperatur wenig unterhalb der Solidustemperatur vorgewärmt sein, damit das Aufheizen auf die Gießtemperatur durch die Induktionsspule 19 möglichst schnell und mit geringen Energieaufwand vor sich geht. Auch in diesem Fall können die Aluminiumlegierung für den Reibbelag 11 und das Faser- oder Partikelverstärkungsmaterial getrennt in das Füllrohr 17 eingebracht werden und sich beim Schmelzen aufgrund der durch die Induktionsströme bewirkten Verwirbelung intensiv miteinander mischen.

Schließlich ist es auch möglich, das Thixogießverfahren anzuwenden, indem in das Füllrohr 17 eingesetzte thixotrope Bolzen auf eine Temperatur zwischen dem Soliduspunkt und dem Liquiduspunkt im Magnetfeld erwärmt werden und im halbflüssigen Zustand in die Form 1, 2 eingedrückt werden. Der thixotrope Zustand kann für die kommerziellen Leichtmetallegierungen in Bolzenform für Formgußzwecke auch in situ durch kontrolliertes Abkühlen von dem flüssigen Zustand kurz über die Schmelztemperatur in den teigigen Zustand zwischen Solidus- und Liquidustemperatur hergestellt werden. Dabei kann eine axiale und/oder radiale Bewegung des Füllrohres 17 mit dem Füllkolben unterstützend herangezogen werden.

Selbstverständlich ist es auch möglich, nur eine der beiden Leichtmetallegierungen im schmelzflüssigen Zustand und die andere der beiden Leichtmetallegierungen im halbflüssigen Zustand in die Form einzudrücken.

Das jeweils angewandte Verfahren ist von den Eigenschaften der jeweils verwendeten Leichtmetallegierungen abhängig, die sowohl gleich als auch unterschiedlich sein können.

Ein Gegendruckkolben 34 mit einem konkaven Kolbenboden 38 ist in einem zylindrischen Schieberwerkzeug 35 angeordnet, das sich als Stanzwerkzeug zum Abscheren der Angußkanäle 12 verwenden läßt. Am Kolben 34 befindet sich ein Anschluß 36 zum Anlegen eines Vakuums an den Formhohlraum oder zum Einbringen eines Schutzgases. Um ein Vakuum von unter 30 mbar einhalten zu können, sind Vakuumdichtungen 33 in der Konturteilfuge 5 angeordnet.

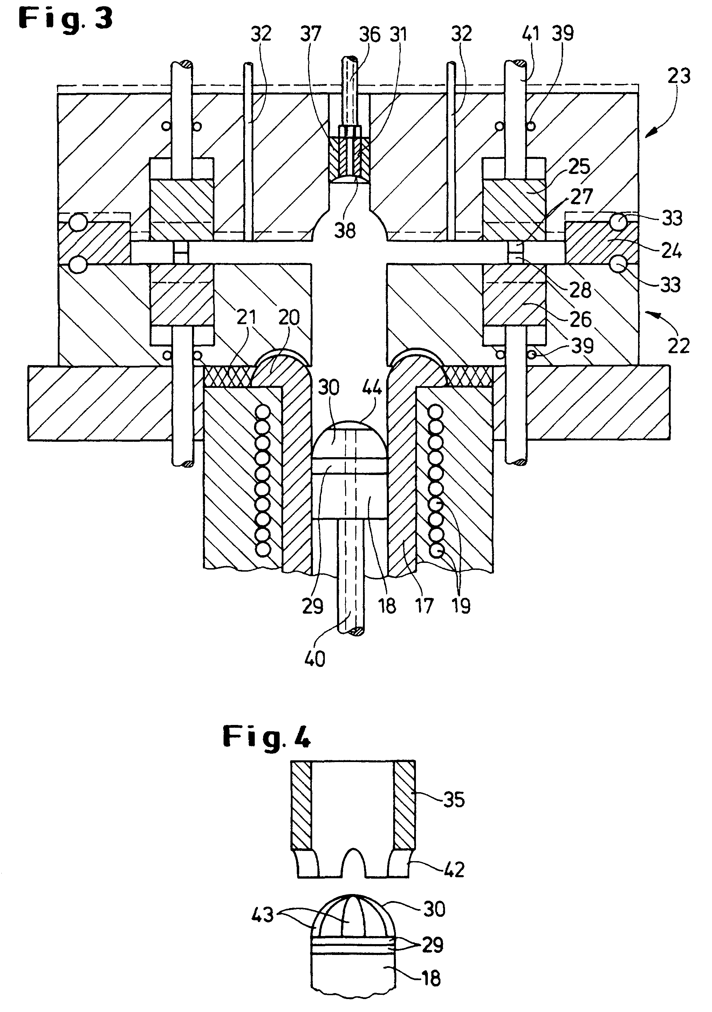

Aus Fig. 4 ist ersichtlich, daß das Schieberwerkzeug 35 Ausschnitte 42 aufweisen kann, die den Anschnitten der radialen Kanäle bzw. Gießläufe 12 angepaßt sind, so daß sich das Schieberwerkzeug 35 als Stanzwerkzeug verwenden läßt. Der konvexe Kolbenboden 30 des Füllkolbens 18 kann entsprechende Vertiefungen 43 aufweisen, um die schmelzflüssige oder thixotrope Leichtmetallegierung beim Nachdrücken mittels des Gegendruckkolbens 34 zu den Ausschnitten 42 und somit zu den Anschnitten der Gießläufe 12 zu leiten.

In Fig. 3 ist eine Form zum Herstellen einer Bremsscheibe mit beidseitigen an den Seitenflächen angeordneten Reibbelägen in Form von Reibscheiben dargestellt.

Gezeigt ist die Stellung der Form zum Gießen des Trägerelements mit ausgezogenen Linien, während die Stellung zum Gießen der Reibbelägen gestrichelt angedeutet ist. Die Gießform besteht aus einer beheizten Unterform 22, einer beheizten Oberform 23 und einer gekühlten Seitenform 24. Ein oberer, ringförmiger Kernzug 25 ist in der Oberform 23 angeordnet, während sich ein entsprechender, koaxialer, ringförmiger, unterer Kernzug 26 in der Unterform 22 befindet. In der in Fig. 3 dargestellten Stellung schließen die freien Oberflächen der Kernzüge 25, 26 mit den Seitenflächen des durch die Unterform 22 und die Oberform 23 bestimmten scheibenförmigen Trägerelements ab. Auf dem Umfang der Kernzüge 25, 26 sind Zapfen 27, 28 angeordnet, die sich in der dargestellten Stellung berühren und Kerne für Bohrungen in dem scheibenförmigen Trägerelement bilden. Die Betätigung der Kernzüge 25, 26 erfolgt mittels Druckstangen 41, die in der Unterform 22 und der Oberform 23 mittels Vakuumdichtungen 39 abgedichtet geführt sind.

Die Leichtmetallegierung für das Trägerelement wird, wie bereits beschrieben, im Füllrohr 17 mittels der Induktionsspule 19 auf Gießtemperatur aufgeheizt und mittels des Füllkolbens 18 in den Formhohlraum gedrückt. Dabei bilden sich im Bereich der Zapfen 25, 26 Bohrungen im scheibenförmigen Trägerelement.

In der Oberform ist ein zweiteiliger Nachdrückkolben aus einem inneren Kolben 31 mit einen Anschluß 36 zum Anlegen eines Vakuums oder zum Einbringen eines Schutzgases und einem äußeren Ringkolben 37, beide mit einem konkaven Kolbenboden 38, angeordnet.

Im Füllkolben 18 ist ein Kanal 40 angeordnet, durch den sich Faser- oder Partikelverstärkungsmaterial in das Füllrohr 17 einbringen läßt. Eine Abschlußkappe 44 mit der konvexen Kontur des Kolbenbodens 30 dient als Verschluß für den Kanal 40.

Nach dem Füllen der Form 22, 23, wird die Oberform 23 in die gestrichelt dargestellte Stellung gebracht, und über Sprühvorrichtungen 32 wird mit Flußmittel vermischtes Kühlwasser auf die Oberflächen des scheibenförmigen Trägerelements aufgebracht. Die Kernzüge 25, 26 werden in die gestrichelte Stellung zurückgefahren, so daß sie einen Raum für den Reibbelag freigeben, und die Leichtmetallegierung für den Reibbelag mit dem Faser- oder Partikelverstärkungsmaterial wird in der beschriebenen Weise mittels des Füllkolbens 18 in diese Räume gedrückt, wobei die Leichtmetallegierung mit dem Faser- oder Partikelverstärkungsmaterial entweder durch den beim Anheben der Oberform 23 gebildeten Spalt bis in den Bereich der Räume für die Reibbeläge fließt oder dorthin über mittels besonderer, durch zusätzliche, nicht dargestellte Kernzüge freigelegte Kanäle gelangt. Um eine porenfreie Struktur zu erreichen, ist in der Oberform 23 der Nachdrückkolben 31, 37 angeordnet, der nach Beendigung des Einbringens der Leichtmetallegierungen einen erhöhten Druck auf die Schmelze aufbringt, bis diese erstarrt sind. Die Stirnflächengeometrie des Nachdrückkolbens 31, 37 ist der des Füllkolbens 18 gegenbildlich angepaßt, um den Druck vor den Anschnitten auszunutzen. Um diesen Effekt zu verstärken kann ein zentrischer Metallnachdrückstift und/oder Spindelantrieb, der einem pneumatisch hydraulischen Antrieb nachfolgt, angebracht werden.

Zwischen der Induktionsspule 19 und der Unterform 22 ist auch bei der Form gemäß Fig. 3 eine magnetische Abschirmung 21 angeordnet, auf die sich verzichten läßt, wenn die Unterform 22 aus einem elektrisch nicht leitenden Material besteht.

Das Faser- oder Partikelverstärkungsmaterial läßt sich z. B. durch einen Kanal 40 im Füllkolben in das Füllrohr 17 einbringen.

Da sich die Leichtmetallegierungen für das Trägerelement und für den Reibbelag vorportioniert z. B. in Form eines vorgewärmten Bolzens oder einer Schmelzeportion in das Füllrohr 17 einbringen lassen, erfolgt das Herstellen einer Bremstrommel oder einer Bremsscheibe mit schneller Taktzeit und ohne hohe Fülldrücke zu erfordern. Bei Bedarf kann das Nachdrücken mit dem Füllkolben erfolgen.

Es können je nach Anpassung der Schmelzzeit in der Spule und der Erstarrungszeit in der Form unter der Form karussellartig (Revolver) zwei bis vier Induktionsspulen angeordnet werden, die zeitgetaktet arbeiten.

Es lassen sich die verschiedensten Aluminium- und Magnesiumlegierungen einsetzen, und als Faser- oder Partikelverstärkungsmaterial sind Siliziumkarbid, Wolframkarbid, Siliziumnitrit, Aluminiumnitrit, Titanborid, Titannitrit und andere geeignet, wobei das Faserverstärkungsmaterial vorzugsweise kurzfaserig ist, während als Flußmittel in Wasser gelöstes und/oder dispergiertes Aluminiumnatriumfluorid, Natriumjodid, Kaliumjodid usw. verwendbar sind.

## Patentansprüche

1. Verfahren zum Herstellen einer Bremstrommel oder einer Bremsscheibe mit einem Trägerelement aus einer gut gießbaren und bearbeitbaren und möglichst preiswerten Leichtmetallegierung und mit einem Reibbelag aus einer faser- oder partikelverstärkten Leichtmetallegierung mit den Schritten:
- Einbringen eines vorportionierten Leichtmetallegierungsbolzens und Aufschmelzen des Bolzens oder Einbringen einer geschmolzenen, vorportionierten Leichtmetalllegierungsmenge für das Trägerelement oder den Reibbelag in ein Füllrohr einer Form,
- Herstellen des Trägerelements oder des Reibbelags in einer Form durch Verbringen der vorportionierten Leichtmetallegierungsschmelze vom Füllrohr in die Form,
- Abkühlen des Trägerelements oder des Reibbelags auf eine gestalthaltende Temperatur,
- Einbringen eines vorportionierten Leichtmetallegierungsbolzens und Aufschmelzen des Bolzens oder Einbringen einer geschmolzenen, vorportionierten Leichtmetallegierungsmenge für das Trägerelement oder den Reibbelag in ein Füllrohr einer Form,
- unmittelbar anschließendes Angießen der partikelverstärkten Leichtmetallegierung an das Trägerelement oder Umgießen des Trägerelements mit der partikelverstärkten Leichtmetallegierung oder Angießen der Leichtmetallegierung für das Trägerelement an dem Reibbelag oder Umgießen des Reibbelages durch Verbringen der vorportionierten Leichtmetallegierungsschmelze vom Füllrohr in die Form und
- Abkühlen und Entformen.

2. Verfahren nach Anspruch 1, **dadurch gekennzeichnet,** daß das Trägerelement oder der Reibbelag in einer ersten Form hergestellt wird und das Angießen oder Umgießen in einer zweiten Form erfolgt.

3. Verfahren nach Anspruch 1, **dadurch gekennzeichnet,** daß das Trägerelement oder der Reibbelag in einer Form hergestellt nach dem Abkühlen des Trägerelements oder des Reibbelags durch Bewegen von Formteilen und/oder von Kernzügen Raum für den Reibbelag oder das Trägerelement geschaffen und in diesen Raum die faser- oder partikelverstärkte Leichtmetallegierung oder die Leichtmetallegierung für das Trägerelement eingebracht wird.

4. Verfahren nach Anspruch 1, 2 oder 3, **dadurch gekennzeichnet,** daß zwischen der Leichtmetallegierung für das Trägerelement und der faser- oder partikelverstärkten Leichtmetallegierung beim Gießen ein mechanischer Verbund durch Vorsprünge, Rippen und/oder Durchbrüche erzeugt wird.

5. Verfahren nach Anspruch 1, 2, 3 oder 4, **dadurch gekennzeichnet,** daß zwischen der Leichtmetallegierung für das Trägerelement und der faser- oder partikelverstärkten Leichtmetallegierung beim Gießen ein intermetallischer Verbund durch eine Oberflächenbehandlung des Trägerelements oder des Reibbelags erzeugt wird.

6. Verfahren nach Anspruch 5, **dadurch gekennzeichnet,** daß die Bildung einer Oxidhaut auf den Leichtmetallegierungen durch Beaufschlagung der Form mit Vakuum oder durch Einbringen eines inerten Spül- oder Schutzgases verhindert wird.

7. Verfahren nach Anspruch 5, **dadurch gekennzeichnet,** daß die Oberfläche des Trägerelements oder des Reibbelags unmittelbar nach dem Öffnen der Form oder unmittelbar vor dem Aufbringen der Leichtmetallegierung des Reibbelags oder des Trägerelements mit einem Flußmittel behandelt wird.

8. Verfahren nach Anspruch 7, **dadurch gekennzeichnet,** daß das Abkühlen des Trägerelements oder des Reibbelages durch Beaufschlagen mit einem flußmittelhaltigen Kühlmittel beschleunigt wird.

9. Verfahren nach Anspruch 8, **dadurch gekennzeichnet,** daß das Abkühlen des Trägerelements oder des Reibbelags durch Besprühen mit flußmittelhaltigem Wasser beschleunigt wird.

10. Verfahren nach einem oder mehreren der Ansprüche 1 bis 9, **dadurch gekennzeichnet,** daß ein Bolzen oder geschmolzene Leichtmetallegierung für den Reibbelag und Faser- oder Partikelverstärkungsmaterial in ein Füllrohr an der Form eingebracht werden, die Leichtmetallegierung induktiv erwärmt, die Leichtmetallegierung mit dem Faser- oder Partikelverstärkungsmaterial durch die aufgrund der Induktionsströme oder das Einbringen der geschmolzenen Leichtmetallegierung bewirkte Verwirbelung der Schmelze vermischt und die vermischte Schmelze in den für den Reibbelag vorgesehenen Raum in der Form eingebracht wird.

11. Verfahren nach Anspruch 10, **dadurch gekennzeichnet,** daß in das Füllrohr zunächst ein Bolzen der Leichtmetallegierung für das Trägerelement eingebracht, induktiv aufgeschmolzen und in den für das Trägerelement vorgesehenen Raum in der Form eingebracht wird und während das Trägerelement abgekühlt, und durch Bewegen von Kernzügen Raum für den Reibbelag geschaffen wird, ein Bolzen der Leichtmetallegierung für den Reibbelag sowie Faser- oder Partikelverstärkungsmaterial in das Füllrohr eingebracht werden, die Leichtmetallegierung induktiv aufgeschmolzen und mit dem Faser- oder Partikelverstärkungsmaterial vermischt und in den für den Reibbelag geschaffenen Raum in der Form eingebracht wird.

12. Verfahren nach einem oder mehreren der Ansprüche 1 bis 9, **dadurch gekennzeichnet,** daß nacheinander ein Bolzen der Leichtmetallegierung für das Trägerelement und ein Bolzen aus der Leichtmetallegierung für den Reibbelag mit eingebetteten Faser- oder Partikelverstärkungsmaterial in ein Füllrohr an der Form eingebracht, einer der Bolzen oder beide Bolzen induktiv auf eine Temperatur oberhalb des Soliduspunktes und unterhalb des Liquiduspunktes erwärmt oder einer der Bolzen oder beide Bolzen auf Schmelztemperatur erwärmt werden und im thixotropen oder im geschmolzenen Zustand in die Form gedrückt werden.

13. Verfahren nach Anspruch 12, dadurch gekennzeichnet, daß der thixotrope Zustand durch kontrolliertes Abkühlen der Schmelze vom schmelzflüssigen Zustand in den teigigen Zustand auf eine Temperatur zwischen der Solidus- und der Liquidustemperatur hergestellt wird.

14. Vorrichtung zum Herstellen einer Bremstrommel oder einer Bremsscheibe mit einem Trägerelement aus einer gut vergießbaren und bearbeitbaren und möglichst preiswerten Leichtmetallegierung und mit einem Reibbelag aus einer faser- oder partikelverstärkten Leichtmetallegierung mit
- einem in einer Unterform (1; 22) aus Stahl angeordneten keramischen Füllrohr (17),
- einem Keramikfüllkolben (18) im Füllrohr (17),
- einer gleitenden Ringdichtung (29) zwischen dem Füllrohr (17) und dem Füllkolben (18) und/oder einer festen Dichtung (20) zwischen der Unterform (1) und dem Füllrohr (17) aus temperaturbeständigem Fasermaterial und/oder aus Graphit und/oder aus Keramik-Metall-Verbundwerkstoff,
- einer um das Füllrohr (17) gelegten Induktionsspule (19) mit einer konzentrierten Windungsdichte zur schnellen Metallsumpferzeugung über dem Füllkolben (18),
- einer beweglichen Oberform (2) aus Stahl oder Formsand und
- in der Unterform (1) und/oder der Oberform (2) Räume für das Trägerelement (10) oder den Reibbelag (11) freigebenden, beweglichen Kernzügen (9; 25, 26), um nach dem Gießen einer Legierung ein Angießen der anderen Legierung zu ermöglichen.

15. Vorrichtung nach Anspruch 14, **dadurch gekennzeichnet,** daß die Unterform (1) aus einem beheizten Boden (3) und einem gekühlten, den Umfang des Gußstücks (10, 11) begrenzenden Bereich (4) besteht.

16. Vorrichtung nach Anspruch 14 oder 15, **dadurch gekennzeichnet,** daß die Oberform (2) beheizt ist.

17. Vorrichtung nach Anspruch 15 und 16, **dadurch gekennzeichnet,** daß der Boden (3) der Unterform (1) und die Oberform (2) auf etwa 300° C beheizt und der den Umfang des Gußstücks (10, 11) begrenzende Bereich (4) auf 100° C gekühlt ist.

18. Vorrichtung nach einem oder mehreren der Ansprüche 14 bis 17, **dadurch gekennzeichnet,** das Füllrohr (17) einen in eine entsprechenden Ausnehmung der Unterform (1) eingreifenden Dichtwulst (20) mit einer geeigneten Dichtung aus keramischem Fasermaterial und/oder Graphit und/oder Keramik-Metall-Verbundwerkstoff aufweist.

19. Vorrichtung nach einem oder mehreren der Ansprüche 14 bis 18, **gekennzeichnet durch** eine magnetische Abschirmung (21) zwischen der um das Füllrohr (17) gelegten Induktionsspule (19) und der Unterform (1).

20. Vorrichtung nach einem oder mehreren der Ansprüche 14 bis 18, **gekennzeichnet durch** einen Füllkolben (18) mit konvexem Kolbenboden (30).

21. Vorrichtung nach einem oder mehreren der Ansprüche 14 bis 20, **gekennzeichnet durch** einen in der Oberform (2) koaxial zum Füllrohr (17) angeordneten Nachdrückkolben (31).

22. Vorrichtung nach Anspruch 20 und 21, **dadurch gekennzeichnet,** daß der Füllkolben (18) und/oder der Nachdrückkolben (31, 34, 35, 37) einen koaxialen, verschließbaren Kanal (36, 40) zum Einbringen des Faser- oder Partikelverstärkungsmaterials in das Füllrohr (17) und/oder zum Beaufschlagen des Formhohlraums mit Vakuum und/oder mit einem Spül- oder Schutzgas aufweisen.

23. Vorrichtung nach Anspruch 21 oder 22, **dadurch gekennzeichnet,** daß der Nachdrück- bzw. Gegendruckkolben (31, 34, 35, 37) als Stanzwerkzeug für die Anschnitte des Gießlaufs (12) des Trägerelements (10) und des Reibbelags (11) dient.

24. Vorrichtung nach Anspruch 21, 22, 23, **dadurch gekennzeichnet,** daß der Nachdrück- bzw. Gegendruckkolben (31, 34, 35, 37) zweiteilig aus einem inneren Teil (31, 34) und einem konzentrischen Ringteil (35, 37) gebildet ist und der Ringteil (35, 37) als Stanzteil den Anschnitten des Gußlaufs angepaßt ist.

25. Vorrichtung nach einem oder mehreren der Ansprüche 21 bis 24, **dadurch gekennzeichnet,** daß der Gegendruck- bzw. Nachdrückkolben (31, 34, 35, 37) pneumatisch und/oder hydraulisch und/oder durch einen oder mehrere Spindelantriebe bewegbar sind.

26. Vorrichtung nach einem oder mehreren der Ansprüche 14 bis 25, **dadurch gekennzeichnet,** daß das Füllrohr (17) mit dem Füllkolben (18) in der Induktionsspule (19) im Magnetfeld axial und/oder radial bewegbar sind.

27. Vorrichtung nach einem oder mehreren der Ansprüche 14 bis 26, **dadurch gekennzeichnet,** daß Unterform (1), Oberform (2), Seitenform (4), Kernzüge (9; 25; 26) und die Betätigung des Nachdrück- bzw. Gegendruckkolbens (31, 34, 35, 37) Dichtungen (33, 39) für Vakuum aufweisen.

28. Vorrichtung nach einem oder mehreren der Ansprüche 14 bis 27, **gekennzeichnet durch** ein Karussell aus mindestens einer Induktionsspule (19) unter der Unterform (1).

29. Vorrichtung nach einem oder mehreren der Ansprüche 14 bis 28, **dadurch gekennzeichnet,** daß der Boden (3) der Unterform (1) und der den Umfang des Gußstücks (10, 11) begrenzende Bereich (4) der Unterform (1) voneinander geteilt sind und der Boden (3) und/oder der Bereich (4) zusätzlich radial geteilt sind.

30. Vorrichtung nach einem oder mehreren der Ansprüche 14 bis 29, **gekennzeichnet durch** eine Sprühvorrichtung (32) für Kühlmittel und/oder für Flußmittel an der Form (1, 2; 22, 23).

## Claims

1. A method for the production of a brake drum or a brake disc with a support element of a light metal alloy which is readily able to be cast and processed and is as favourably-priced as possible, and with a friction lining of a fibre- or particle-reinforced light metal alloy with the steps:
- introduction of a pre-portioned light metal alloy pin and melting of the pin or introduction of a melted, pre-portioned quantity of light metal alloy for the support element or for the friction lining into a filling tube of a mould,
- production of the support element or of the friction lining in a mould by bringing the pre-portioned light metal alloy melt from the filling tube into the mould,
- cooling of the support element or of the friction lining to a shape-maintaining temperature,
- introduction of a pre-portioned light metal alloy pin and melting of the pin or introduction of a melted, preportioned quantity of light metal alloy for the support element or for the friction lining into a filling tube of a mould,
- immediately subsequent casting of the particle-reinforced light metal alloy to the suport element or casting around the support element with the particle-reinforced light metal alloy or casting of the light metal alloy for the support element to the friction lining or casting around the friction lining by bringing the pre-portioned light metal alloy melt from the filling tube into the mould and
- cooling and removing from the mould.

2. The method according to Claim 1, characterised in that the support element or the friction lining is produced in a first mould and the casting on or casting around takes place in a second mould.

3. The method according to Claim 1, characterised in that the support element or the friction lining is produced in a mould and after the cooling of the support element or of the friction lining by moving mould parts and/or of core lines space is created for the friction lining or the support element and into this space the fibre- or particle-reinforced light metal alloy or the light metal alloy for the support element is introduced.

4. The method according to Claim 1, 2 or 3, characterised in that between the light metal alloy for the support element and the fibre- or particle-reinforced light metal alloy, during casting a mechanical composite is produced by projections, ribs and/or openings.

5. The method according to Claim 1, 2, 3 or 4, characterised in that between the light metal alloy for the support element and the fibre- or particle-reinforced light metal alloy, during casting an inter-metallic composite is produced by a surface treatment of the support element or of the friction lining.

6. The method according to Claim 5, characterised in that the formation of an oxide skin onto the light metal alloys is prevented by application of the mould with vacuum or by introduction of an inert flushing- or protective gas.

7. The method according to Claim 5, characterised in that the surface of the support element or of the friction lining is treated immediately after opening the mould or immediately before the application of the light metal alloy of the friction lining or of the support element with a flux.

8. The method according to Claim 7, characterised in that the cooling of the support element or of the friction lining is accelerated by application with a cooling medium containing flux.

9. The method according to Claim 8, characterised in that the cooling of the support element or of the friction lining is accelerated by spraying with water containing flux.

10. The method according to one or more of Claims 1 to 9, characterised in that a pin or a molten light metal alloy for the friction lining and fibre- or particle-reinforcement material are introduced into a filling tube on the mould, the light metal alloy is heated inductively, the light metal alloy is mixed with the fibre- or particle reinforcement material through the turbulence of the melt owing to the induction currents or caused by the introduction of the molten light metal alloy, and the mixed melt is introduced into the space in the mould provided for the friction lining.

11. The method according to Claim 10, characterised in that firstly a pin of the light metal alloy for the support element is introduced into the filling tube, is melted inductively and introduced into the space provided in the mould for the support element and whilst the support element is cooled, and through movement of core lines space is created for the friction lining, a pin of the light metal alloy for the friction lining and also fibre- or particle-reinforcing material are introduced into the filling tube, the light metal alloy is melted inductively and is mixed with the fibre- or particle reinforcing material and is introduced into the space created in the mould for the friction lining.

12. The method according to one or more of Claims 1 to 9, characterised in that in succession a pin of the light metal alloy for the support element and a pin of the light metal alloy for the friction lining with embedded fibre- or particle-reinforcing material are introduced into a filling tube on the mould, one of the pins or both pins are heated inductively to a temperature above the solid point and below the liquid point or one of the pins or both pins are heated to melting temperature and are pressed into the mould in thixotropic or in molten state.

13. The method according to Claim 12, characterised in that the thixotropic state is produced by controlled cooling of the melt from the molten state into the pasty state to a temperature between the solid and the liquid temperature.

14. A device for the production of a brake drum or a brake disc with a support element of a light metal alloy which is readily able to be cast and processed and is as favourably-priced as possible, and with a friction lining of a fibre- or particle-reinforced light metal alloy with
- a ceramic filling tube (17) arranged in a lower mould (1; 22) of steel,
- a ceramic filling piston (18) in the filling tube (17),
- a sliding ring seal (29) between the filling tube (17) and the filling piston (18) and/or a fixed seal (20) between the lower mould (1) and the filling tube (17) of temperature-resistant fibre material and/or of graphite and/or of ceramic/metal/composite material,
- an induction coil (19) placed around the filling tube (17) with a concentrated winding density for rapid metal sump production over the filling piston (18),
- a movable upper mould (2) of steel or moulding sand and
- movable core lines (9; 25, 26) in the lower mould (1) and/or the upper mould (2), freeing spaces for the support element (10) or the friction lining (11), in order to make possible, after the casting of an alloy, a casting on of the other alloy.

15. The device according to Claim 14, characterised in that the lower mould (1) consists of a heated base (3) and of a cooled area (4) adjoining the periphery of the cast piece (10, 11).

16. The device according to Claim 14, or 15, characterised in that the upper mould (2) is heated.

17. The device according to Claim 15 and 16, characterisd in that the base (3) of the lower mould (1) and the upper mould (2) is heated to approximately 300° C and the area (4) adjoining the periphery of the cast piece (10, 11) is cooled to 100° C.

18. The device according to one or more of Claims 14 to 17, characterised in that the filling tube (17) has a sealing bead (20) engaging into a correspodning recess of the lower mould (1), with a suitable seal of ceramic fibre material and/or graphite and/or ceramic/metal composite material.

19. The device according to one or more of Claims 14 to 18, characterised by a magnetic shield (21) between the induction coil (19) placed around the filling tube (17) and the lower mould (1).

20. The device according to one or more of Claims 14 to 18, characterised by a filling piston (18) with a convex piston base (30).

21. The device according to one or more of Claims 14 to 20, characterized by an after-pressure piston (31) arranged in the upper mould (2) coaxially to the filling tube (17).

22. The device according to Claim 20 and 21, characterized in that the filling piston (18) and/or the after-pressure piston (31, 34, 35, 37) have a coaxial, closable channel (36, 40) for the introduction of the fibre- or particle-reinforcing material into the filling tube (17) and/or for applying the mould cavity with vacuum and/or with a flushing- or protective gas.

23. The device according to Claim 21 or 22, characterized in that the after-pressure- or counterpressure piston (31, 34, 35, 37) serves as punching tool for the intersections of the casting path (12) of the support element (10) and of the friction lining (11).

24. The device according to Claim 21, 22, 23, characterised in that the after-pressure- or counterpressure piston (31, 34, 35, 37) is formed in two parts from an inner part (31, 34) and a concentric ring part (35, 37) and the ring part (35, 37) as a punch part is adapted to the intersections of the casting path.

25. The device according to one or more of Claims 21 to 24, characterised in that the counterpressure- or after-pressure piston (31, 34, 35, 37) are movable pneumatically and/or hydraulically and/or by one or more spindle drives.

26. The device according to one or more of Claims 14 to 25, characterised in that the filling tube (17) is movable with the filling piston (18) in the induction coil (19) in the magnetic field axially and/or radially.

27. The device according to one or more of Claims 14 to 26, characterised in that the lower mould (1), upper mould (2), side mould (4), core lines (9; 25; 26) and the actuation of the after-pressure- or counterpresusre piston (31, 34, 35, 37) have seals (33, 39) for vacuum.

28. The device according to one or more of Claims 14 to 27, characterised by a carousel of at least one induction coil (19) under the lower mould (1).

29. The device according to one or more of Claims 14 to 28, characterised in that the base (3) of the lower mould (1) and the area (4) of the lower mould (1) adjoining the periphery of the cast piece (10, 11) are divided from each other and the base (3) and/or the area (4) are in addition radially divided.

30. The device according to one or more of Claims 14 to 29, characterised by a spray device (32) for cooling medium and/or for flux on the mould (1, 2; 22, 23).

## Revendications

1. Procédé de fabrication d'un tambour de frein ou d'un disque de frein comportant un élément porteur fait d'un alliage léger facilement coulable et usinable et d'un prix aussi bas que possible, ainsi qu'une garniture de friction faite d'un alliage léger renforcé aux fibres ou aux particules, comportant les étapes suivantes :
- introduction d'une billette en alliage léger préportionnée et fusion de la billette ou introduction d'une quantité d'alliage léger préportionnée et en fusion pour l'élément porteur ou pour la garniture de friction, dans un tube de remplissage d'un moule,
- fabrication de l'élément porteur ou de la garniture de friction dans un moule par transfert de l'alliage léger préportionné en fusion, du tube de remplissage au moule,
- refroidissement de l'élément porteur ou de la garniture de friction à une température maintenant la forme,
- introduction d'un billette en alliage léger préportionnée et fusion de la billette ou introduction d'une quantité d'alliage léger préportionnée et en fusion pour l'élément porteur ou pour la garniture de friction, dans un tube de remplissage d'un moule,
- moulage directement suivant de l'alliage léger renforcé aux particules sur l'élément porteur, ou enrobage de l'élément porteur avec l'alliage léger renforcé aux particules, ou moulage de l'alliage léger pour l'élément porteur sur la garniture de friction, ou enrobage de la garniture de friction par transfert de l'alliage léger préportionné en fusion, du tube de remplissage au moule, et
- refroidissement et démoulage.

2. Procédé selon la revendication 1, caracterisé en ce que l'élément porteur ou la garniture de friction est fabriqué dans un premier moule et la coulée sur ou autour de ceux-ci s'effectue dans un deuxième moule.

3. Procédé selon la revendication 1, caractérisé en ce que l'élément porteur ou la garniture de friction est fabriqué dans un moule, en ce que, après refroidissement de l'élément porteur ou de la garniture de friction, il est créé de l'espace pour la garniture de friction ou l'élément porteur, par déplacement de parties du moule et/ou de tire-noyaux, et que l'alliage léger renforcé aux fibres ou aux particules, ou l'alliage léger pour l'élément porteur, est introduit dans cet espace.

4. Procédé selon la revendication 1, 2 ou 3, caractérisé en ce qu'il est produit entre l'alliage léger pour l'élément porteur et l'alliage léger renforcé aux fibres ou aux particules, au moment de la coulée, une liaison mécanique par saillies, nervures et/ou ajours.

5. Procédé selon la revendication 1, 2, 3 ou 4, caractérisé en ce qu'il est produit, entre l'alliage léger pour l'élément porteur et l'alliage léger renforcé aux fibres ou aux particules, au moment de la coulée, une liaison intermétallique par un traitement de surface de l'élément porteur ou de la garniture de friction.

6. Procédé selon la revendication 5, caractérisé en ce que la formation d'une pellicule d'oxyde sur les alliages de métal léger est empêchée par mise sous vide du moule ou par introduction d'un gaz inerte de lavage ou de protection.

7. Procédé selon la revendication 5, caractérisé en ce que la surface de l'élément porteur ou de la garniture de friction est traitée avec un fondant, immédiatement après ouverture du moule et immédiatement avant application de l'alliage léger et de la garniture de friction ou de l'élément porteur.

8. Procédé selon la revendication 7, caractérisé en ce que le refroidissement de l'élément porteur de la garniture de friction est accéléré par l'action d'un réfrigérant contenant un fondant.

9. Procédé selon la revendication 8, caractérisé en ce que le refroidissement de l'élément porteur ou de la garniture de friction est accéléré par aspersion d'eau contenant un fondant.

10. Procédé selon l'une ou plusieurs des revendications 1 à 9, caractérisé en ce qu'un billette ou un alliage léger en fusion pour la garniture de friction et la matière de renfort aux fibres ou aux particules est introduite dans un tube de remplissage du moule, l'alliage léger est chauffé de manière inductive, l'alliage léger est mélangé à la matière de renfort aux fibres ou aux particules par la mise en tourbillonnement du métal fondu, provoquée par les courants d'induction ou par l'introduction de l'alliage léger en fusion, et la matière en fusion mélangée est introduite dans l'espace prévu dans le moule pour la garniture de friction.

11. Procédé selon la revendication 10, caractérisé en ce qu'une billette de l'alliage léger est d'abord introduite dans le tube de remplissage pour l'élément porteur, en ce qu'elle est fondue de manière inductive et introduite dans l'espace prévu dans le moule pour l'élément porteur, et pendant que l'élément porteur est refroidi, et que de l'espace est créé pour la garniture de friction par déplacement de tire-noyaux, un billette de l'alliage en métal léger pour la garniture de friction ainsi qu'une matière de renfort aux fibres ou aux particules sont introduits dans le tube de remplissage, l'alliage léger est fondu de manière inductive et est mélangé à la matière de renfort aux fibres ou aux particules, et est introduit dans l'espace créé dans le moule pour la garniture de friction.

12. Procédé selon une ou plusieurs des revendications 1 à 9, caractérisé en ce que sont introduites l'une après l'autre dans un tube de remplissage du moule, une billette de l'alliage léger pour l'élément porteur et une billette en alliage léger pour la garniture de friction, avec matière de renfort aux fibres ou aux particules, noyée à l'intérieur, l'une des billettes ou les deux billettes sont chauffées à une température supérieure au point solidus et inférieure au point liquidus, ou l'une des billettes ou les deux billettes sont chauffées à la température de fusion et sont pressées dans le moule à l'état thixotrope ou à l'état fondu.

13. Procédé selon la revendication 12, caractérisé en ce que l'état thixotrope est réalisé par refroidissement contrôlé du métal en fusion, de l'état liquide de fusion à. l'état pâteux, à une température comprise entre la température solidus et la température liquidus.

14. Dispositif de fabrication d'un tambour de frein ou d'un disque de frein, comportant un élément porteur fait d'un alliage léger facilement coulable et usinable et d'un prix aussi bas que possible, ainsi qu'une garniture de friction faite d'un alliage léger renforcé aux fibres ou aux particules, comportant :
- un tube de remplissage (17) céramique disposé dans un moule inférieur (1 ; 22) en acier,
- un piston de remplissage céramique (18) dans le tube de remplissage (17),
- une garniture d'étanchéité annulaire (29) glissante entre le tube de remplissage (17) et le piston de remplissage (18) et/ou une garniture d'étanchéité fixe (20) entre le moule inférieur (1) et le tube de remplissage (17) en une matière fibreuse résistante aux hautes températures et/ou en graphite et/ou en un matériau composite de métal et de céramique,
- une bobine d'induction (19) placée autour du tube de remplissage (17) avec une densité de spires concentrée pour la production rapide d'un fonds de métal au-dessus du piston de remplissage (18),
- un moule supérieur (2) immobile en acier ou en sable de moulage, et
- dans le moule inférieur (1) et/ou le moule supérieur (2) des tire-noyaux (9 ; 25, 26) mobiles, dégageant des espaces pour l'élément porteur (10) ou la garniture de friction (11) afin de permettre, après coulée d'un alliage, une coulée de l'autre alliage.

15. Dispositif selon la revendication 14, caractérisé en ce que le moule inférieur est constitué d'un fond (3) chauffé et d'une zone (4) refroidie, qui délimite le pourtour de la pièce coulée (10, 11).

16. Dispositif selon la revendication 14 ou 15, caractérisé en ce que le moule supérieur (2) est chauffé.

17. Dispositif selon les revendications 15 et 16, caractérisé en ce que le fond (3) du moule inférieur (1) et le moule supérieur (2) sont chauffés à environ 300 °C et la zone (4), qui délimite le pourtour de la pièce coulée (10, 11) est refroidie à 100 °C.

18. Dispositif selon une ou plusieurs des revendications 14 à 17, caractérisé en ce que le tube de remplissage (17) comporte un bourrelet d'étanchéité (20) qui s'engage dans un évidement correspondant du moule inférieur (1), avec une garniture d'étanchéité appropriée en matière fibreuse céramique et/ou graphite et/ou en un matériau composite de métal et de céramique.

19. Dispositif selon une ou plusieurs des revendications 14 à 18, caractérisé par un écran magnétique (21) entre la bobine d'induction (19) placée autour du tube de remplissage (17) et le moule inférieur (1).

20. Dispositif selon une ou plusieurs des revendications 14 à 18, caractérisé par un piston de remplissage (18) avec fond de piston (30) convexe.

21. Dispositif selon une ou plusieurs des revendications 14 à 20, caractérisé par un piston de pression complémentaire (31) disposé coaxialement au tube de remplissage (17).

22. Dispositif selon les revendications 20 et 21, caractérisé en ce que le piston de remplissage (18) et/ou le piston de pression complémentaire (31, 34, 35, 37) comportent un canal (36, 40) coaxial pouvant être fermé pour l'introduction de la matière de renfort aux fibres ou aux particules dans le tube de remplissage (17) et/ou pour mettre sous vide la cavité du moule et/ou faire agir un gaz de lavage ou de protection.

23. Dispositif selon la revendication 21 ou 22, caractérisé en ce que le piston de pression complémentaire ou de contre-pression (31, 34, 35, 37) sert d'outil de découpe pour des attaches de coulée (12) de l'élément porteur (10) et de la garniture de friction (11).

24. Dispositif selon les revendications 21, 22, 23, caractérisé en ce que le piston de pression complémentaire ou de contre-pression (31, 34, 35, 37) est en deux parties, une partie intérieure (31, 34) et une partie annulaire concentrique (35, 37), et en ce que la partie annulaire (35, 37) est adaptée, en tant qu'élément découpé, aux attaches de coulée.

25. Dispositif selon une ou plusieurs des revendications 21 à 24, caractérisé en ce que le piston de contre-pression ou piston de pression complémentaire (31, 34, 35, 37) est déplaçable pneumatiquement et/ou hydrauliquement et/ou au moyen de plusieurs mécanismes à broche.

26. Dispositif selon une ou plusieurs des revendications 14 à 25, caractérisé en ce que le tube de remplissage (17) avec le piston de remplissage (18) est déplaçable axialement et/ou radialement dans la bobine d'induction (19), dans le champ magnétique.

27. Dispositif selon une ou plusieurs des revendications 14 à 26, caractérisé en ce que le moule inférieur (1), le moule supérieur (2), le moule latéral (4), les tire-noyaux (9 ; 25 ; 26) et l'actionnement du piston de pression complémentaire ou de contre-pression (31, 34, 35, 37) comportent des garnitures d'étanchéité (33, 39) pour vide.

28. Dispositif selon une ou plusieurs des revendications 14 à 27, caractérisé par un carrousel constitué d'au moins une bobine d'induction (19) sous le moule inférieur (1).

29. Dispositif selon une ou plusieurs des revendications 14 à 28, caractérisé en ce que le fond (3) du moule inférieur (1) et la zone (4) du moule inférieur (1), qui délimite le pourtour de la pièce coulée (10, 11), sont séparés l'un de l'autre et le fond (3) et/ou la zone (4) sont en plus divisés radialement.

30. Dispositif selon une ou plusieurs des revendications 14 à 29, caractérisé par un dispositif de pulvérisation (32) pour réfrigérant et/ou pour fondant, sur le moule (1, 2 ; 22, 23).
